# EUROPÄISCHE PATENTSCHRIFT

(11) **EP 1 336 834 B1**
(45) Veröffentlichungstag und Bekanntmachung des Hinweises auf die Patenterteilung: **07.06.2006**
(21) Anmeldenummer: 03405062.5
(22) Anmeldetag: 06.02.2003
(51) Int. Cl.: G01N 1/42

(54) **Vorrichtung zur Behandlung von Biopsieproben sowie Verfahren zu deren Verwendung**
Device for treating biopsy specimens and method of use thereof
Dispositif de traitement d'échantillons de tissus et procédé d'utilisation correspondant

(30) Priorität: 14.02.2002 CH 2572002
(43) Veröffentlichungstag der Anmeldung: 20.08.2003
(73) Patentinhaber: Studer, Daniel, Dr., 3293 Dotzigen (BE) (CH)
(72) Erfinder: Studer, Daniel, Dr., 3293 Dotzigen (BE) (CH)
(74) Vertreter: Dolder, Fritz

(56) Entgegenhaltungen:
- EP-A- 0 853 238
- US-A- 5 507 298
- US-A- 5 533 342
- US-B1- 6 262 838
- HOHENBERG H ET AL: "HIGH-PRESSURE FREEZING OF CELL SUSPENSIONS IN CELLULOSE CAPILLARY TUBES" JOURNAL OF MICROSCOPY, OXFORD, GB, Bd. 175, Nr. PART 1, 1. Juli 1994 (1994-07-01), Seiten 34-43, XP000645911 ISSN: 0022-2720

## Beschreibung

Die Erfindung bezieht sich auf eine Vorrichtung zur Behandlung von Biopsieproben sowie ein Verfahren zu deren Verwendung. Die moderne Elektronenmikroskopie biologischer Proben untersucht immer häufiger Proben die durch Frieren immobilisiert wurden (Kryofixation). Das Frieren muß so erfolgen, daß die Proben vitrifizieren, d.h. daß beim Abkühlen kein Eis entsteht, das die Probe segregieren würde. Segregation ist das Auftrennen der Probe in pures Wasser (Eiskristalle) und konzentrierte, gelöste Stoffe zwischen den Verästelungen der Eiskristalle. Beim Vitrifizieren wird das Wasser in seiner flüssigen Anordnung immobilisiert. Das heißt alle Bestandteile der biologischen Probe werden während der Immobilisierung nicht verschoben und stellen somit die Momentaufnahme der lebenden Materie zum Zeitpunkt ihrer Fixierung dar. Vitrifizierung ist in einem biologischen System ein schneller Prozeß; es ist im Normalfall eine Einfrierrate von einigen 100'000 K/s erforderlich. Derart hohe Einfrierraten werden aus physikalischen Gründen nur in sehr dünnen Proben erreicht (Dicke < 20µm). Die zur Vitrifizierung benötigte kritische Einfrierrate kann um einen Faktor 100 reduziert werden, falls die Probe bei einem Druck um 2000 bar gefroren wird. Beim sogenannten Hochdruckfrieren (Studer et al., Journal of Microscopy, 179 (1995), 321-332) werden ca. 200 µm dicke biologische Proben vitrifiziert. Das Herstellen einer 200 µm dikken Probe mit einem Durchmesser von 1.2 bis 3mm ist schwierig. Es schmälert die Vorteile des Hochdruckfrierens, wenn viel Zeit verbraucht wird, um die biologischen Proben, z.B. ein Stück Gewebe, für das Frieren vorzubereiten.

Einzelne Versuche, sehr kleine Gewebestücke schnell zu präparieren, sind von verschiedenen Autoren beschrieben worden (Hohenberg H. et al., Journal of Microscopy, 183 (1996), 133-139; Shimoni E. et al Journal of Microscopy, 192 (1998), 236-247). Shimoni et al. feuerten kleine Metallkapillaren (Goldröhrchen mit Innendurchmesser 200µm) ins Gewebe; das Auffinden dieser Kapillaren im Gewebe ist jedoch zeitraubend und die Verarbeitung der gefrorenen Proben schwierig. Hohenberg et al. (1996) haben den Versuchstieren mit käuflichen, teilweise für die besonderen Zwecke adaptierten Mikrobiopsienadeln Gewebeproben entnommen, die eine Größe von 0.2-0.25mm x 0.4mm x 4-8mm aufwiesen.

Kommerziell erhältliche Vorrichtungen zur Entnahme von Mikrobiopsieproben aus lebendem Gewebe weisen einen Federmechanismus (Pistole) auf, der eine Nadel aufnimmt (beispielsweise Pro-Mag^{TM}, Manan Medical Products, Inc., Northbrook IL 60062, USA). Diese Biopsienadel besteht ihrerseits aus einer massiven Lanze (Durchmesser0.6 - 3mm) mit einer Ausnehmung von 8-16mm Länge und 0.3-2mm Tiefe zur Aufnahme des Biopsiematerials (Hohenberg a.a.O. Fig. 1-D, S. 134/135). Diese Lanze ist am einen Ende zugespitzt, am anderen Ende weist sie eine Halteeinrichtung auf. Diese Lanze ist ihrerseits von einer dünnwandigen Hohlnadel umgeben, deren Innendurchmesser dem Außendurchmesser der Lanze entspricht, so daß Lanze und Hohlnadel gegeneinander verschiebbar sind. Die Hohlnadel weist am einen Ende eine Schneide und am anderen Ende eine Halteeinrichtung auf.

Die Hohlnadel und die in ihr steckende Lanze werden mit den Halteeinrichtungen in der Pistole befestigt, so daß folgender Mechanismus beim Entnehmen des Biopsiematerials abläuft: Zuerst wird die in die Pistole eingesetzte Nadel ins Gewebe geführt, wobei die Hohlnadel nur die Spitze der Lanze hervortreten läßt. Anschließend wird der Federmechanismus ausgelöst. Dadurch wird zunächst die Lanze weiter ins Gewebe vorgeschoben, so daß die Ausnehmung nicht mehr von der Hohlnadel umgeben ist. Das Gewebe legt sich in die Ausnehmung und im nächsten Augenblick wird durch den Federmechanismus die Hohlnadel mit der Schneide wiederum über die Ausnehmung geschoben. Dadurch wird der in der Ausnehmung liegende Teil des Gewebes abgeschnitten. Anschließend wird die Hohlnadel zusammen mit der Lanze aus dem Gewebe zurückgezogen und die äußere Hohlnadel gegenüber der Lanze erneut zurückgeschoben, so daß die ausgeschnittene Probe zugänglich wird.

Die dabei gewonnenen Biopsieproben weisen beispielsweise folgende Masse auf: 200 bis 250 µm hoch, 400 µm breit und 4 bis 8 mm lang (Hohenberg, a.a.O. S. 135). Diese Proben wurden mit geeigneten Schneidewerkzeugen (Rasierklingen, Skalpelle, o.ä.) manuell verkleinert, auf die richtige Größe zugeschnitten und mit Pinzetten oder anderen geeigneten Instrumenten in die Probenplättchen der betreffenden Hochdruckgefrieranlagen transferiert.

Die dabei gewonnenen Biopsieproben weisen beispielsweise folgende Masse auf: 200 bis 250 µm hoch, 400 µm breit und 4 bis 8 mm lang (Hohenberg, a.a.O. S. 135). Diese Proben wurden mit geeigneten Schneidewerkzeugen (Rasierklingen, Skalpelle, o.ä.) manuell verkleinert, auf die richtige Größe zugeschnitten und mit Pinzetten oder anderen geeigneten Instrumenten in die Probenplättchen der betreffenden Hochdruckgefrieranlagen transferiert

US-A-5 533 342 (Gordon) offenbart eine Vorrichtung zur Vorbereitung und zum Transfer von biologischen Proben vor der weiteren Verarbeitung in einem Mikrotom. Die Gewebeproben werden dabei auf einem Objektträger (block holder) in einen Tropfen eines viskösen Gels eingebettet (embedding medium). Sie können in dieser Form in Richtung einer y-Achse und einer z-Achse verschoben und dadurch dem Messer des Mikrotoms zugeführt werden. Die Gewebeproben stammen dabei aus kommerziell erhältlichen Biopsienadeln und haben ungefähr die Größe eines Stecknadelkopfes (Sp. 9, Z. 44-50). Der Nachteil dieser Vorrichtung besteht unter anderem darin, daß die Biopsieproben durch nicht näher festgelegte und daher von einem Ausfahrenden (Laboranten) zum anderen variierende manuelle Manipulationen auf den Objektträger und auf die Oberfläche des Einbettungsmaterials transferiert werden (Sp. 5, Z. 43/44). Dieser kritische und für das Laboroersonal anspruchsvollste Schritt wird also völlig der manuellen Geschicklichkeit, motorischen Begabung und dem Ausbildungsstand des Personals Oberlassen. Die dadurch verursachten Zeitverluste und die von der Begabung und dem Ausbildungsstand des Laborpersonals abhängige Ausschussquote und Qualitafsverluste beim Transfer der Proben von der Biopsienadel auf den Objektträger wird also von Fall zu Fall erheblich variieren, und dürften demzufolge bei dieser Vorrichtung beträchtlich sein.

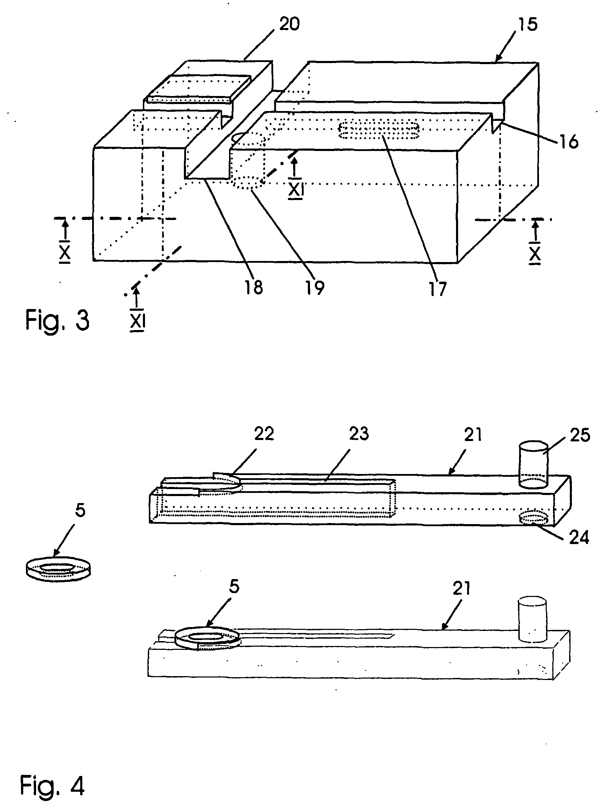

Ein weiterer Nachteil der Vorrichtung besteht darin, daß das Einbettungsmaterial ein Fluid (viscous gel) ist, welches keine vorgegebenen, starren Formen aufweist, und daß daher weder das genaue Volumen, noch die Position der Probe vor der weiteren Verarbeitung exakt vorbestimmt ist (Sp. 5, Z. 38-40 sowie Fig. 4). Der Transfervorgang von der Biopsienadel auf den block holder 22 sowie die endgültige Position der Probe in dem Fluidtropfen hängen deshalb von vielen Zufälligkeiten ab und sind jedenfalls nicht exakt vorbestimmt und von Fall zu Fall auch nicht reproduzierbar.

US-B1-6 262 838 (Montagu) offenbart eine Fokussiervorrichtung für Mikroskope, insbesondere für optische Scannervorrichtungen für das Lesen von Biochips. In dieser Vorrichtung werden die Proben auf konventionellen mikroskopischen Objektträgern transportiert und diese um eine Drehachse verdreht, um das Scannen der Probenoberfläche durchzuführen. Auch in dieser Vorrichtung werden die Proben durch nicht näher festgelegte manuelle Manipulationen auf die Objektträger transferiert, was zu den gleichen Nachteilen führt wie nach der Lehre von US-A-5 533 342 (Gordon).

Diese manuelle Vorbereitung von Biopsieproben für das Hochdruckgefrieren weist indessen eine Reihe von schwerwiegenden Nachteilen auf, welche dieses Verfahren für größere Mengen von Proben und namentlich für den Routinebetrieb als ungeeignet erscheinen lassen: Der Zeitaufwand zwischen der Exzision des Biopsiematerials und dem Beginn des Gefriervorganges wurde mit ca. 40 Sekunden angegeben (Hohenberg, a.a.O. S. 135); die Erfahrung hat indessen gezeigt, daß dies eine sehr optimistische Zeitangabe ist. Dieser Zeitaufwand erscheint als zu groß, insbesondere in denjenigen Fällen, in denen Momentaufnahmen von Zellen anzufertigen sind, deren Ultrastruktur sich rasch verändert, beispielsweise Muskelzellen. Ein weiterer Nachteil der manuellen Manipulation von Biopsieproben besteht darin, daß die gallertartige Konsistenz und die geringen Ausmasse der Gewebeproben deren zuverlässige manuelle Manipulation erheblich erschwert, so daß die Reproduzierbarkeit der Ergebnisse gering und die Ausschussquote beträchtlich ist. Dies wiederum ist nicht nur aus allgemeinen Kostengründen unerwünscht, sondern insbesondere in Situationen nicht akzeptierbar, in denen auf Patienten/Probanden oder Versuchstiere Rücksicht genommen werden muß und eine Exzision von Biopsiematerial daher nicht unbeschränkt häufig wiederholt werden darf, wie beispielsweise bei der Entnahme von Proben aus dem lebenden Myokard. Der gewichtigste Nachteil des manuelle Manipulierens der Biopsieproben besteht schließlich darin, daß diese Manipulation derart schwierig auszuführen ist, daß erfahrungsgemäß nur ein kleiner Teil des technischen Personals eines instituts überhaupt in der Lage ist, auch nach längerer Schulung einwandfreie oder zumindest befriedigende Proben zu erzeugen. Die Ergebnisse der manuellen Präparation sind daher schlecht reproduzierbar und der Benutzer der kommerziellen Apparaturen darauf angewiesen, durch glücklichen Zufall manuell und motorisch weit überdurchschnittlich begabtes Personal für die Präparation einsetzen zu können.

Die Aufgabe der vorliegenden Erfindung bestand dementsprechend darin, die manuellen und motorischen Anforderungen an das ausführende Personal gegenüber der manuellen Präparation *zu senken*, also die arbeitstechnischen Abläufe bei der Präparation zu erleichtern und dadurch zu bewirken, daß auch durchschnittlich geschultes und begabtes technisches Personal in der Lage ist, einwandfreie Proben herzustellen. Dadurch sollte ermöglicht werden, die Sicherheit und Reproduzierbarkeit der Präparation gegenüber der manuellen Präparation zu verbessern. Zudem sollte dadurch ermöglicht werden, die Geschwindigkeit der Präparation wesentlich zu erhöhen (Zeitbedarf zwischen Exzision und Beginn des Gefrierens unter 30 sec) und dadurch die Qualität der Momentaufnahmen der zu untersuchenden Objekte zu verbessern.

Die Aufgabe wird durch eine Vorrichtung nach dem Kennzeichen des Patentanspruchs 1 sowie durch ein Verfahren zu deren Verwendung nach dem Kennzeichen des Patentanspruchs 16 gelöst.

Die Arbeitsabläufe bei der Präparation wurden mit der erfindungsgemäßen Vorrichtung derart vereinfacht, daß die Präparation von durchschnittlich geschultem und manuell durchschnittlich begabtem technischem Personal zuverlässig durchgeführt werden kann. Dadurch ermöglicht es die erfindungsgemäße Vorrichtung, die Sicherheit und Reproduzierbarkeit der Ergebnisse der Präparation erheblich zu steigern und die Ausschussquote praktisch vollständig zu eliminieren. Dadurch wird die Geschwindigkeit der Präparation von Biopsiematerial erheblich vergrößert. Die Zeit einer Probenentnahme gemessen vom Einstich der Mikrobiopsienadel bis zum Abschluß des Einfriervorganges beträgt noch maximal 30 Sekunden. [Reihenfolge der einzelnen Punkte der Vorteile der Erfindung verändert.]

Die erfindungsgemäße Vorrichtung eliminiert Unsicherheiten und Risiken der manuellen Manipulation, indem sie den Transfer der Gewebeproben von der Biopsienadel 1 in den Probenraum 4 des Präparatlättchen 5 durch mechanische Konstruktionselemente unabhängig von der manuellen Manipulation gestaltet: Alle einzelnen Schritte dieses Transfers sind durch entsprechende mechanische Konstruktionselemente im voraus determiniert. Dabei wird die Biopsienadel 1 durch eine im voraus exakt festgelegte Position (Hohlraum) im Transferteil 15 .... sowie durch die Vorrichtungen für den Transfer der Biopsieoroben 3 aus einer Ausnehmung 2 der Biopsienadel 1 in den Probenraum 4 des Präparatplättchens 5 als auswechselbarer Bestandteil in die erfindungsemäße Vorrichtung integriert Variationen aufgrund der wechselnden manuelle Geschicklichkeit des Personals wirken sich nicht mehr auf das gewünschte Resultat einer perfekten Probe im Probenraum 4 aus und die Zeitverluste werden gegenober der manuellen Manipulation entscheidend reduziert.

Im Gegensatz zum dargestellten Stand der Technik US-A-5 533 342 (Gordon) sind die erfindungsgemäßen Präparatplättchen 5 aus einem formstabilen Material (z.B. Metall) gefertigt und weisen einen Probenraum (Holtlraum) 4 mit konstantem Hohlvolumen auf Es ist ein wesentlicher Vorteil der erfindungsgemäßen Vorrichtung, daß das Volumen dieses Probenraumes 4 exakt auf das Volumen der Ausnehmung der Biopsienadel 1 und damit auf das Volumen der entnommenen Gewebeprobe 3 abgestimmt ist, daß mit anderen Worten, die entnommene Gewebeprobe 3 exakt in den Probenraum 4 des Präparatolättchens paßt.

Im folgenden werden bevorzugte Ausführungsformen der erfindungsgemäßen Vorrichtung sowie deren Verwendung anhand von Zeichnungen beispielhaft dargestellt, wobei die Erfindung nicht auf diese dargestellten besonderen Ausführungsformen beschränkt ist. Es sind jeweils in perspektivischer Darstellung folgende Bestandteile der Vorrichtung dargestellt:
- Fig. 1a und 1b: die zwei Prinzipien des Biopsietransfers von der Ausnehmung der Biopsienadel zum Probenraum des Präparatplättchens.
- Fig. 2a bis 2f: verschiedene Ausführungsformen von Präparateplättchen;
- Fig. 3: einen Transferteil;
- Fig. 4: einen Schlitten mit eingesetztem Präparateplättchen in vergrößertem Maßstab;
- Fig. 5 und 6: zwei verschiedene Ausführungsformen von Umladeteilen, von denen einer aus mehreren Teilen zusammengesetzt ist.

In den Figuren 7 bis 11 werden die verschiedenen Schritte des Verfahrens zur Behandlung der Biopsieproben unter Verwendung der erfindungsgemäßen Vorrichtung beispielhaft dargestellt. Es zeigen dabei

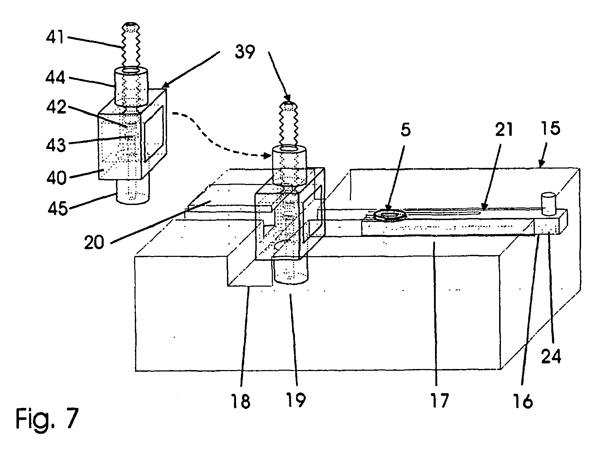

- Fig. 7: einen Transferteil mit eingesetztem Schlitten und leerem Präparatplättchen sowie dem eingesetzten Probenhalter in Wartestellung;

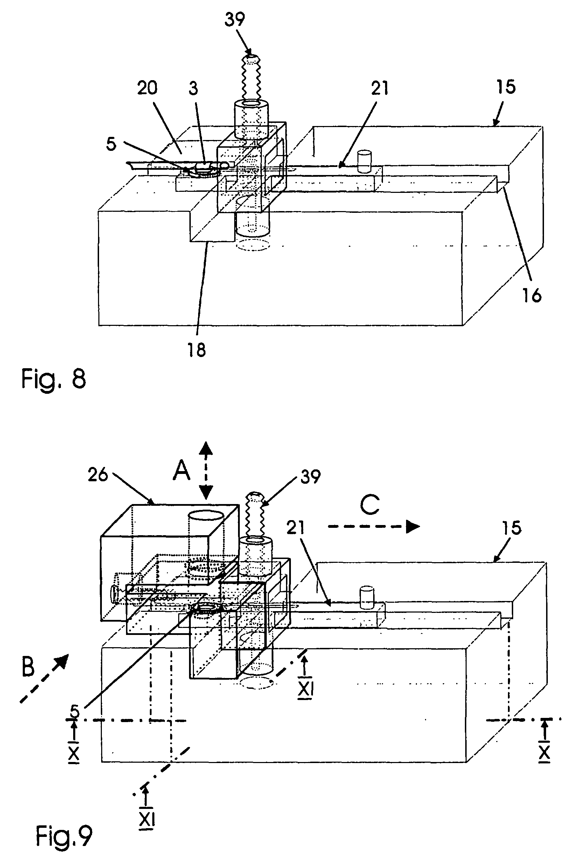

- Fig. 8: einen Transferteil mit einer mit der Biopsieprobe gefüllten Biopsienadel;
- Fig. 9: einen Transferteil mit Biopsienadel und aufgesetztem Umladeteil, sowie schematisch mit Pfeilen angegeben die Bewegungen, die nötig sind, die Biopsie von der Biopsienadel in das Präparateplättchen und den Probenhalter zu transferieren.

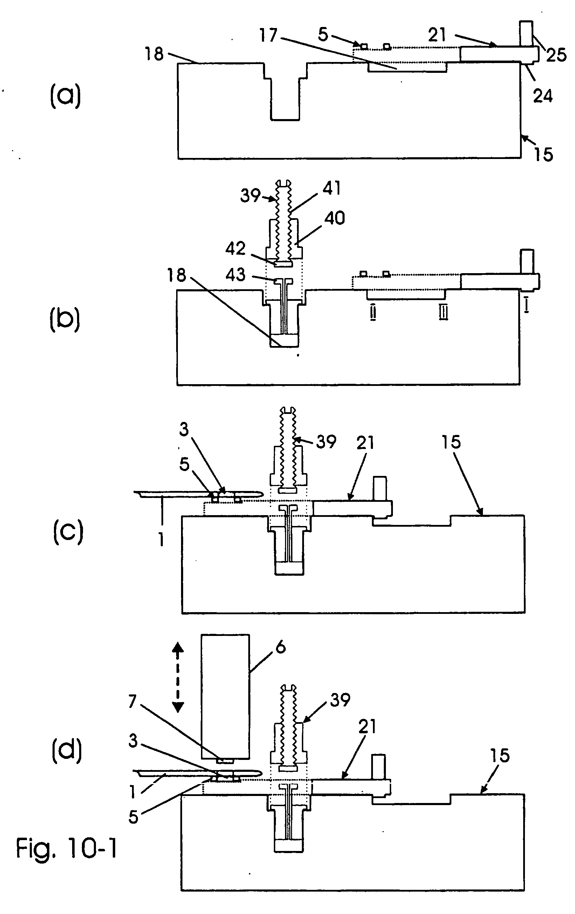

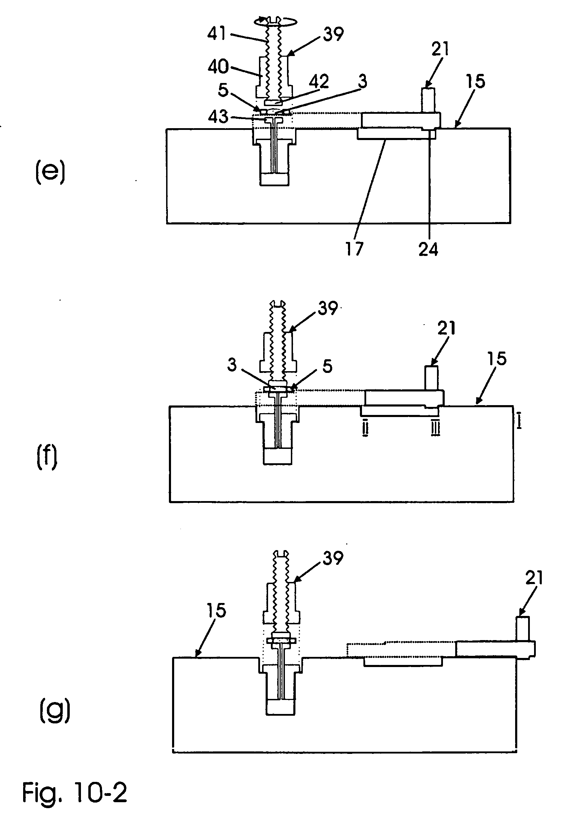

- Fig. 10 a bis 10 g: einen Längsschnitt durch einen Transferteil mit den verschiedenen Schritten des Transfers einer Biopsieprobe;

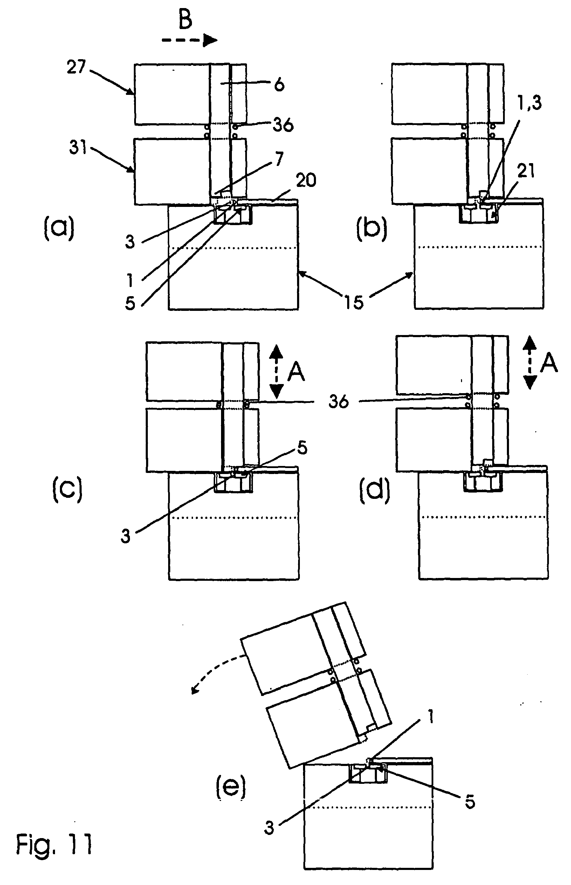

- Fig. 11a bis 11e: einen Querschnitt durch einen Transferteil mit den verschiedenen Schritten des Transfers einer Biopsieprobe;

Zur erfindungsgemäßen Vorrichtung gehören nur teilweise in den Figuren dargestellte Biopsienadeln, welche gegenüber den kommerziell erhältlichen Produkten (beispielsweise Pro-Mag^{TM}, Manan Medical Products, Inc., Northbrook IL 60062, USA) eine wesentlich verkleinerte Ausnehmung zur Aufnahme der Biopsieprobe aufweisen. Die Ausnehmung ist beispielsweise 0.2-0.3mm tief und lediglich 1.2mm lang; dies ergibt ein Volumen der gewonnenen Biopsien, welches dem Volumen des Probenraumes des Präparatplättchens entspricht. Die Nadel ist fest in der Biopsiepistole fixiert, so daß die innere Lanze mit der Ausnehmung für das Biopsiematerial gegenüber der Biopsiepistole unbeweglich ist.

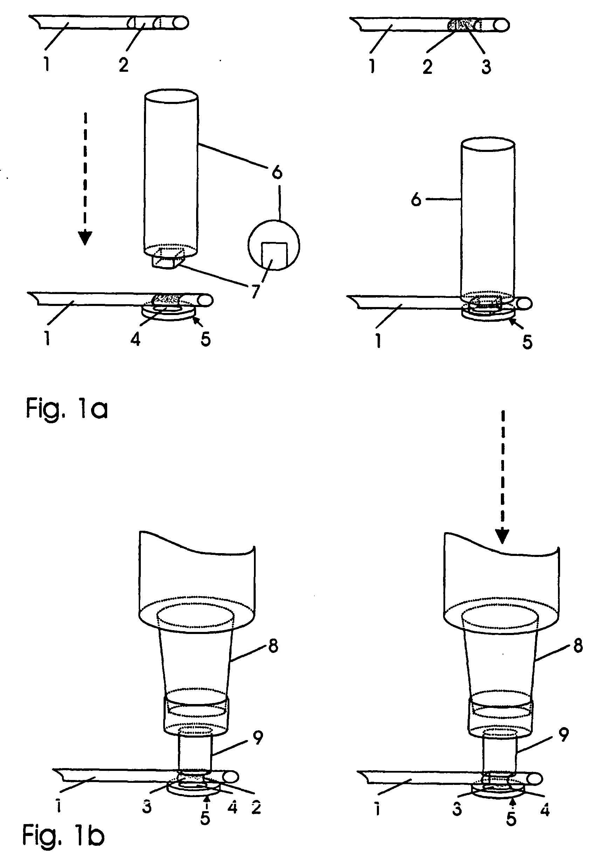

**Fig. 1a** zeigt zwei Ausführungsarten des Transfers von Biopsieproben mit der erfindungsgemäßen Vorrichtung. In die leere Ausnehmung 2 einer Biopsienadel 1 wird eine Biopsieprobe 3 eingefüllt. Die mit dieser Biopsieprobe gefüllte Nadel wird auf den Probenraum 4 eines Präparatplättchens 5 zentriert. Anschließend wird diese Biopsieprobe durch Vorschieben des zylinderförmigen Formstücks 6 mit passgenau geformter Spitze 7 aus der Ausnehmung 2 in den Probenraum 4 transferiert.

**Fig. 1b** zeigt, wie eine Biopsie 3 durch einen Flüssigkeitsstrahl von der Ausnehmung 2 der Biopsienadel 1 in den Probenraum 4 transferiert werden kann. An einer kommerziell erhältlichen Injektionsspritze 8 wird ein Übergangsteil 9 angebracht, der Spritze 8 und Ausnehmung 2 verbindet. Dieser Übergangsteil 9 weist am oberen Ende einen Hohlraum zur Aufnahme der Injektionspritze 8 auf; an seiner Unterseite ist er derart geformt, daß sein Querschnitt der Form der Ausnehmung 2 der Biopsienadel 1 entspricht. Durch Verschieben des Kolbens der Injektionsspritze 8 wird die Biopsieprobe mittels eines Flüssigkeitsstrahls (Pufferlösung, 1-Hexadecen, etc.) in den Probenraum 4 eines Präparatplättchens 5 gespült.

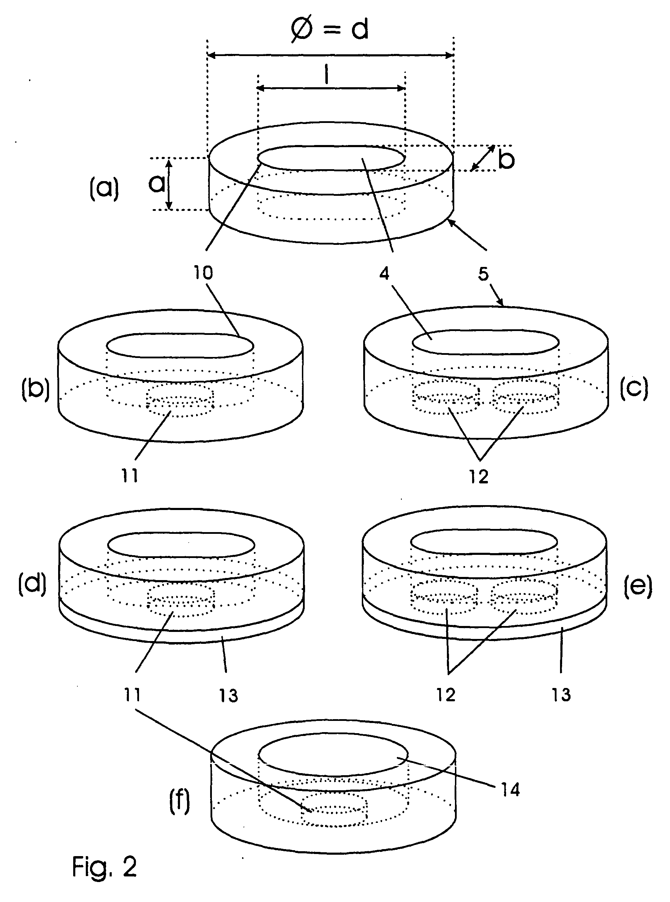

Die in **Fig. 2a bis 2f** gegenüber den anderen Figuren vergrößert dargestellten Präparateplättchen 5 bestehen aus einem gut wärmeleitenden Werkstoff, beispielsweise einem Metall, vorzugsweise aus der Reihe Kupfer, Messing, Titan, Aluminium, und weisen einen Probenraum 4, der als Schlitz (in Fig. 2f als kreisrunde Vertiefung) ausgebildet ist, auf. Besonders bewährt haben sich zu diesem Zweck Plättchen aus verhältnismäßig weichem Kupferblech, wie es beispielsweise im Bauhandwerk benutzt wird. Alternativ zu der in **Fig. 2** dargestellten kreisrunden Form dieser Präparatplättchen sind andere geometrische Formen verwendbar. Die Form der Ausnehmung 22 des Schlittens 21 **(Fig. 4)** ist in diesem Fall entsprechend anzupassen. Werden andere als kreisrunde Formen des Präparatplättchens 5 eingesetzt, so bietet dies den zusätzlichen Vorteil, daß die geometrische Orientierung des Präparateplättchens 5 und des Probenraums 4 entsprechend der Ausnehmung 22 des Schlittens 21 vorbestimmt werden kann. Die Schlitzdicke b des Probenplättchens 5 erscheint als kritisch; sie sollte 0.3mm nicht überschreiten. Wird a > 2b, so sollte b 0.2mm nicht überschreiten. Der Probenraum 4 wird aus fertigungstechnischen Gründen zweckmäßigerweise mit je einem Halbkreis 10 abgeschlossen, jedoch sind auch andere geometrische Formen zulässig. Physikalische, sowie druck- und wärmetechnische Eigenschaften der Präparateplättchen wie auch der einzufrierenden biologischen Probe definieren den Bereich zweckmäßiger Dimensionen. Für die vorgeschlagenen Präparateplättchen sind dies für a = 0.3-5mm, für I = 0.3-5mm und wie oben beschrieben für b = 0.2-0.3mm. Durchmesser d muß mindestens I + 0.6mm und sollte maximal l+2mm betragen. In einem Ausführungsbeispiel wiesen die verwendeten Präparateplättchen beispielsweise folgende Masse auf: a = 0.6mm, b = 0.3mm, l = 1.2mm, d = 3mm. Folgende morphologischen Varianten haben sich als zweckmäßig erwiesen:
Fig. 2-a Metallscheibe mit Probenraum 4. Diese Form bietet den Vorteil, daß sie einfach und billig herzustellen ist, sie weist jedoch den Nachteil auf, daß je nach der Konsistenz der Probe dieselbe unter Umständen beim Transfer vom Umladeteil in den Probenhalter verloren gehen kann.
Fig. 2-b und 2-c: Metallscheiben mit schlitzförmiger Vertiefung, welche nur bis 0.05-0.1mm an die gegenüberliegende Seite reicht. In der Mitte 11 (Fig. 2 c) oder an beiden Enden 12 (Fig. 2 c) ist die Vertiefung durchgebrochen. Diese Variante bietet den Vorteil, daß die Proben beim Transfer nicht verlorengehen können.
Fig. 2-d und 2-e: Metallscheiben mit gleichner Geometrie wie die Fig.2-b und 2-c jedoch aus zwei dauerhaft zusammengefügten Teilen gefertigt. Diese Varianten werden dadurch hergestellt, daß ein Plättchen gemäß Fig.2-a mit einer Metallfolie 13 zusammengefügt, beispielsweise mit einem geeigneten Klebstoff zusammengeklebt wird, welche entsprechende Löcher 11 bzw. 12 aufweist.
Fig. 2-f Dieses Plättchen entspricht in etwa dem Plättchen aus Fig. 2-b. Es enthält statt eine schlitzförmige Vertiefung eine kreisrunde 14. Diese Ausführung ist gefriertechnisch betrachtet nicht so gut wie die Plättchen 2-a bis 2-e, sie ist jedoch in ihrer Herstellung die eindeutig kostengünstigste Präparateplättchen Variante.

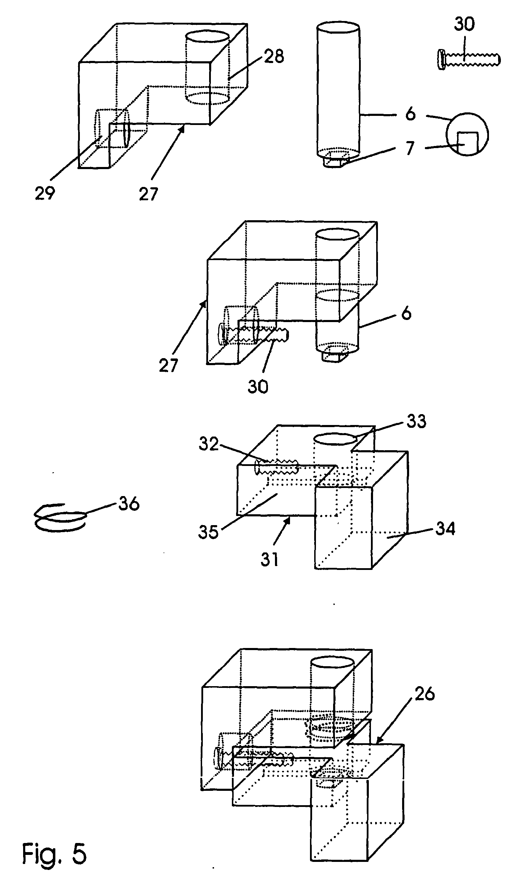

Die in **Fig. 3** beispielhaft dargestellte Ausführungsform eines Transferteils besteht aus einem quaderförmigen Formstück 15, welches aus einem Werkstoff mit glatter Oberfläche und chemischer Resistenz gegenüber den in der Gefriertechnik verwendeten Flüssigkeiten, beispielsweise 1-Hexadecen, Pufferlösungen, Kohlehydratlösungen usw. besteht. Als zweckmäßiger Werkstoff für diesen Transferteil haben sich Metallegierungen, insbesondere Aluminiumlegierungen, oder Kunststoffe, wie beispielsweise POM erwiesen. Dieses Formstück 15 weist auf seiner nach oben gerichteten Oberfläche eine die gesamte Länge durchlaufende Nut 16 auf. In dieser Nut ist eine zweite Nut 17 von definierter Länge und Position eingelassen zur Aufnahme eines Schlittens 21 und Positionierung desselben in der Nut 16. Senkrecht zur Nut 16 verläuft eine tiefere Nut 18, welche zur Aufnahme und genauen Positionierung eines Probenhalters 39 mit Hilfe der hohlzylinderförmigen Ausnehmung 19 sowie zur exakten Positionierung eines Umladeteils 26 **(Fig. 5)** dient. Der durch die Nut 18 abgeschnittene kürzere Teil der Nut 16 wird von einem auf der Oberseite des Formstücks 15 dauerhaft angebrachten Plättchen 20 derart überdeckt, daß ein vorgegebener Hohlraum entsteht, der ein genaues Positionieren einer eingeführten Biopsienadel 1 ermöglicht.

Dieser Transferteil 15 dient dazu, die Präparatplättchen 5 an der richtigen Stelle für die Aufnahme der Biopsieproben bereitzulegen, die Proben anschließend in diesen Präparatplättchen 5 aufzunehmen und die mit den Proben gefüllten Präparatplättchen 5 in geeignete Probenhalter zu transferieren.

Der in **Fig. 4** vergrößert dargestellte Schlitten 21 besteht aus einem quaderförmigen Streifen aus einem geeigneten Werkstoff, vorzugsweise dem gleichen Werkstoff wie Formteil 15 (beispielsweise POM). Er ist derart dimensioniert, daß er in der Längsnut 16 des Formstücks 15 leicht manuell verschoben werden kann. Dieser Schlitten 21 weist an seinem einen Ende einen ausgeschnittenen Kreisbogen 22 von ca. 220° auf, der in seinen Dimensionen den Dimensionen eines Präparatplättchens 5 entspricht und dieses zum Verschieben innerhalb der Nut 16 aufnehmen kann. Diese Ausnehmung 22 kann entsprechend der geometrischen Form des verwendeten Präparateplättchens 5 auch anders als kreisrund ausgestaltet werden. Dadurch kann die Orientierung des Präparateplättchens 5 und des Probenraums 4 im Schlitten 21 nach den Wünschen des Benutzers vorbestimmt werden. Dieser Schlitten 21 weist des weiteren einen vertikalen, in der Längsachse verlaufenden Schlitz 23 auf, der es ermöglicht, die in ein Präparatplättchen 5 transferierte Biopsieprobe 3 in einen geeigneten Probenhalter 39 einzuführen. Stift 24 an der Unterseite des Schlittens 21 dient zur Positionierung des Schlittens 21 in Nut 17. Sein in Richtung der Nut 18 gerichtetes Ende definiert die Position des Transfers der Biopsieprobe 3 von der Biopsienadel 1 ins Präparatplättchen 5, das andere Ende definiert die Position des Schlittens 21, in der das Präparatplättchen 5 in einem geeigneten Probenhalter 39 befestigt werden kann. Stift 25 dient als Handgriff für die manuelle Bedienung des Schlittens 21.

Der Umladeteil wird vorzugsweise aus einem transparenten Kunststoff hergestellt, der eine optische Kontrolle während des gesamten Transfervorgangs der Biopsieprobe ermöglicht. In der Ausführungsform gemäß **Fig. 5** wird dieser Umladeteil 26 aus einem Oberteil 27, einem Unterteil 31 sowie mehreren Zubehörteilen zusammengesetzt. Der Oberteil 27 setzt sich aus zwei quaderförmigen Formstükken zusammen und weist eine vertikal verlaufende, hohlzylinderförmige Ausnehmung 28 und einen horizontalen Schlitz 29 auf. In die Ausnehmung 28 des Oberteils 27 wird der Zylinder 6 (aus Fig. 1a) eingesetzt und dauerhaft mit dem Formstück 27 verbunden. Der Zylinder 6 weist eine Spitze 7 auf, welche in ihrem Grundriß der Ausnehmung 2 einer Biopsienadel 1 entspricht und asymmetrisch auf der Unterseite des Zylinders 6 aufgesetzt ist.

Beim Zusammensetzen des Umladeteils aus Ober- und Unterteil wird zunächst um den aus dem Oberteil 27 hinausragenden Teil des Zylinders 6 eine kurze Spiralfeder 36 gelegt. Anschließend wird der Zylinder 6 durch die Ausnehmung 33 in den Unterteil 31 eingeführt und bleibt in dieser Ausnehmung frei beweglich.

Formstück 27 des Oberteils wird nun mit Hilfe einer Schraube 30, welche durch einen horizontal durch diesen Oberteil verlaufenden Schlitz 29 in einem horizontal verlaufenden Schraubengewinde 32 des Unterteils 31 festgeschraubt wird, mit dem Formstück 31 des Unterteils beweglich verbunden. Der Fuß 34 des Formstücks 31 greift seinerseits in die Nut 18 des Transferteils 15 ein und ermöglicht es, den zusammengesetzten Umladeteil 26 als Ganzes in dieser Nut 18 kontrolliert zu verschieben.

An der Unterseite des Formstückes 31, welches die Bohrung 33 enthält, verläuft eine Stufe 35, deren Höhe dem Durchmesser einer Biopsienadel entspricht. Diese Stufe 35 dient dazu, die Biopsienadel 1, welche zunächst lose an die Seitenfläche des Plättchens 20 (Fig. 3) angelegt wird, zwischen Stufe 35 und dieser Seitenfläche des Plättchens 20 festzuklemmen und dadurch an der gewünschten Stelle über dem Präparatplättchen 5 zu positionieren. Alternativ dazu kann die Biopsienadel 1 in einen vorher vorbereiteten Hohlraum über dem Präparatplättchen 5 eingeführt werden. Ein solcher Hohlraum kann beispielsweise derart gebildet werden, daß zunächst das Formstück 31 an den in Ausnehmung 19 eingesetzten Rahmen 40 des Probenhalters 39 herangeschoben wird, wodurch die Stufe 35 mit der Seitenfläche des Plättchens 20 einen für die Biopsienadel 1 passgenauen Hohlraum bildet.

Durch die vertikale Verschiebung der Stücke 27 und 31 gegeneinander wird der Transfer der Biopsieprobe 3 von der Biopsienadel 1 in das Präparatplättchen 5 bewirkt, wie dies in Fig. 1a dargestellt worden ist.

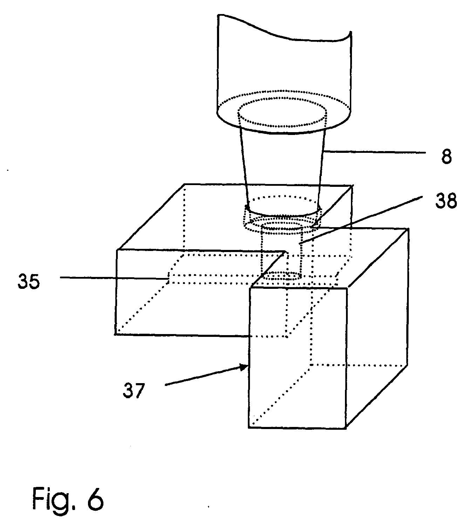

Alternativ zu dieser aus mehreren Teilen zusammengesetzten Ausführungsform kann eine aus einem Stück bestehende Ausführungsform eines Umladeteils gemäß **Fig. 6** verwendet werden. Diese dient dazu, mechanisch empfindliche Biopsieproben statt durch die Einwirkung eines festen Zylinders 6 durch einen Flüssigkeitsstrom in das Präparatplättchen 5 zu transferieren. Diese Ausführungsform besteht aus einem Formstück 37, welches eine vertikal verlaufende hohlzylinderförmige Ausnehmung 38 aufweist. Diese Ausnehmung 38 entspricht in ihrer Form dem Übergangsstück 9 aus Fig. 1 b und dient zur Aufnahme der Injektionsspritze 8 während des Einspülens einer Biopsieprobe 3 aus der Biopsienadel 1 in ein Präparatplättchen 5. Auch dieses Formstück 37 weist an seiner Unterseite eine Stufe 35 auf, welche zusammen mit dem Plättchen 20 zum Festklemmen der Biopsienadel 1 dient bzw. in der bereits beschrieben Art an der Bildung eines Hohlraums mitwirkt, in den die Biopsienadel 1 nachträglich eingeführt werden kann.

Dieser Umladeteil 37 aus einem Stück dient zum Transfer von mechanisch empfindlichen Proben wie z.B. Proben von Hirngewebe. Die überschüssige Spülflüssigkeit verläßt bei diesem Verfahren die Vorrichtung über die beiden Nuten 16 und 18.

Das Verfahren zur Verwendung der erfindungsgemäßen Vorrichtung ist in den Figuren 7 bis 9 dargestellt:

In einem ersten Verfahrensschritt wird der Probenhalter 39 in die Nut 16 und die Ausnehmung 19 des Transferteils 15 eingesetzt (**Fig. 7**). Als Probenhalter dient dabei beispielsweise ein für eine Hochdruckgefrieranlage konzipiertes Produkt (Produkteinformation Nr. 16 50 02 vom Dezember 2000 der Leica Microsystems GmbH (Leica EM PACT)). Dieser Probenhalter 39 weist folgende Einzelteile auf: Eine Ummantelung 40 dient als mechanischer Rahmen zur Aufnahme der übrigen Bestandteile. In der Längsachse dieses Rahmens 40 ist in einem entsprechenden Schraubengewinde eine Schraube 41 eingesetzt, welche an ihrem in den Rahmen hineinragenden Ende eine Diamantdichtfläche 42 aufweist und zum sicheren Festklemmen des Präparatplättchens 5 dient. Auf der dem Schraubengewinde gegenüberliegenden Seite des Rahmens 40 ist eine Auflagevorrichtung 43 für das Präparatplättchen 5 vorgesehen, welche ihrerseits mit der Druckleitung zur Übertragung des Hochdruckes während des Gefriervorganges verbunden ist. Die als Hohlzylinder ausgestalteten Fortsätze 44 und 45 des Rahmens 40 dienen zur Verankerung des Probenhalters in der Hochdruckgefrieranlage, Fortsatz 45 fixiert zudem den Probenhalter während des Transfers der Biopsieproben passgenau in der Ausnehmung 19 des Transferteils 15.

Nun wird der Schlitten 21 mit dem leerem Präparatplättchen 5 in die Nut 16 des Transferteils 15 eingesetzt, so daß der Stift 24 an der Aussenkante des Transferteils 15 anschlägt (Position I in Fig. 10-b), und ein leeres Präparatplättchen 5 wird in die Ausnehmung 22 eingelegt. Anschließend wird der Schlitten 21 mit dem leeren Präparatplättchen 5 in dieser Nut 16 verschoben, bis der Stift 24 an dem der Nut 18 benachbarten Ende der Vertiefung 17 anschlägt (Position II in Fig. 10-b und 10-c). Das Präparatplättchen 5 befindet sich nun in einer definierten Position und ist bereit für die Aufnahme einer Biopsieprobe.

Nun wird die Biopsie mit Hilfe einer kommerziell erhältlichen Mikrobiopsievorrichtung aus dem Gewebe entnommen. Wird dabei eine gegenüber den beschriebenen Verfahren verkleinerte Ausnehmung in der Lanze der Biopsienadel verwendet, so hat es sich gezeigt, daß beim Einschieben der Nadel ins Gewebe zweckmäßigerweise Spitze und Ausnehmung der Lanze vor der Schneide der Hohlnadel fest positioniert werden. Dadurch kann die Ausnehmung im Gegensatz zu den beschriebenen Verfahren (Hohenberg, a.a.O. S. 135) sehr genau im Gewebe positioniert werden. Durch das relativ langsame Vorschieben der Lanze kann das Gewebe im Gegensatz zu den kommerziell erhältlichen Vorrichtungen die Ausnehmung der Lanze besser und einfacher füllen. Um das Gewebe abzuschneiden, das sich in dieser Art in die kleine Ausnehmung gelegt hat, wird die Hohlnadel in an sich bekannter Art über die Lanze geschoben. Darauf wird die Nadel aus dem Gewebe gezogen und die Biopsieprobe 3 durch Zurückziehen der Hohlnadel wieder freigelegt.

Die Biopsieprobe 3 in Ausnehmung 2 der Biopsienadel 1 kommt bei vorbestimmter Einschubtiefe entlang der Seitenfläche des Plättchens 20 genau über den Probenraum 4 eines Präparatplättchens 5 zu liegen, wie dies in **Fig. 8** dargestellt ist. Nun wird der Umladeteil 26 bzw. 37(**Fig. 9** nur Umladeteil 26 dargestellt) in die Nut 18 des Transferteils 15 eingeführt und darin verschoben, bis die Stufe 35 an der Unterseite des Formstücks 31 die Biopsienadel 1 an die Seitenfläche des Plättchens 20 andrückt und festklemmt. Dadurch wird die Ausnehmung 2 der Biopsienadel 1 genau über dem Probenraum 4 des bereitliegenden Präparatplättchens 5 positioniert.

Der Transfer einer Biopsieprobe 3 von der Biopsienadel 1 in das Probenplättchen 5 und anschließend in den Probenhalter 39 wird in **Fig. 10a bis g** dargestellt (Längsschnitt durch die Mitte von Nut 18):

Um das Präparatplättchen 5 in Schlitten 21 einzusetzen, wird der Schlitten 21 in Nut 16 am der Nut 18 abgewandten Ende positioniert. Der Stift 24 ragt dabei über die Oberkante des Transferteils 15 hinaus (Position I) **(Fig. 10 a).**

Nun wird der Probenhalter 39 in die Nut 18 bzw. die Ausnehmung 19 eingesetzt (**Fig. 10 b**).

Der Schlitten 21 wird bis an den dem Probenhalter 39 näher gelegenen Anschlag (Position II) des Stiftes 24 verschoben, so daß das Präparatplättchen 5 teilweise unter dem Plättchen 20 (nicht dargestellt) liegt. Nun wird die mit einer Biopsieprobe 3 gefüllte Biopsienadel 1 an die Seitenfläche des Plättchens 20 lose angelegt, so daß die Biopsieprobe 3 genau über dem Probenraum 4 des Präparatplättchens 5 liegt. Die richtige Position der Biopsieprobe 3 in der Längsachse der Nut 16 wird dadurch festgelegt, daß die zeichnerisch nicht dargestellten Biopsiepistole, in der die Biopsienadel 1 befestigt ist, bis zu einem vorbestimmten Anschlag an der Vorrichtung geführt wird, beispielsweise an die Aussenkante einer (zeichnerisch nicht dargestellten) Grundplatte **(Fig. 10 c).** Alternativ dazu kann diese Position der Biopsienadel 1 in der Längsachse der Nut 16 auch dadurch festgelegt werden, daß deren Spitze bis zu einem vorgegebenen Anschlag geführt wird, beispielsweise im Formstück 31 oder an der Seitenwand des Probenhalters 39.

Durch Verschieben des Umladeteils 31 bzw. 37 in der Nut 18 bis zum Anliegen an die Seitenfläche des Rahmens 40 des Probehalters 39 wird die Biopsienadel 1 mit der Biopsieprobe 3 zwischen Umladeteil und Seitenfläche des Plättchens 20 fixiert. Alternativ dazu kann die Biopsienadel 1 auch in einen vorher vorbereiteten Hohlraum eingeführt werden. Ein solcher Hohlraum kann beispielsweise derart gebildet werden, daß die beiden letzten Verfahrensschritte vertauscht werden: Nach dem Positionieren des Präparatplättchens 5 in Position II wird der Umladeteil in der Nut 18 eingesetzt und verschoben, bis die Seitenfläche des Formstücks 31 bzw. 37 an der Seitenfläche des Rahmens 40 des Probenhalters 39 anliegt. In den dadurch gebildeten Hohlraum zwischen Nut 18, Seitenfläche von 31 bzw. 37 und Seitenfläche des Plättchens 20 wird anschließend die Biopsienadel 1 eingeführt. Die Biopsieprobe 3 wird anschließend durch eine Vertikalbewegung des Zylinders 6 von der Biopsienadel 1 in das Probenplättchen 5 geschoben (**Fig. 10 d**).

Als nächstes wird der Schlitten 21 zum gegenüberliegenden Anschlag des Stiftes 24 in der Vertiefung 17 verschoben (Position III). Dadurch wird das mit der Biopsieprobe 3 gefüllte Präparatplättchen 5 im Probenhalter 39 richtig positioniert und mit Hilfe der Schraube 41 festgeklemmt (**Fig. 10 e**).

Schließlich wird der Schlitten 21 in seine Startposition am entfernteren Ende der Nut 16 zurückgezogen und der Stift 24 aus der Position III wiederum in seine Startposition I an der Aussenkante des Transferteils 15 zurückverschoben. (**Fig. 10 f und 10 g**). Nun wird der Probenhalter 39 mit dem festgeklemmten Präparateplättchen 5 an einen Manipulator befestigt, welcher die Entnahme aus der Nut 18 und der Ausnehmung 19 sowie das Einfrieren der Biopsieprobe erlaubt.

In **Fig. 11a bis 11e** wird das Einführen der Biopsienadel 1 und der Transfer der Biopsieprobe 3 von der Biopsienadel 1 ins Präparatplättchen 5 in einem Querschnitt durch einen Transferteil 15 und eine Ausführungsform eines aus den beiden Formstücken 27 und 31 zusammengesetzten Umladeteils dargestellt:

Die Biopsienadel 1 wird in der vorbestimmten Position, senkrecht zur Zeichnungsebene, an die Seitenfläche des Plättchens 20 angelegt, welches auf der Oberseite des Formteils 15 dauerhaft angebracht ist und seinerseits das Probenplättchen 5 teilweise überdeckt **(Fig. 11 a)**.

Um die Biopsienadel 1 zu fixieren, wird der Umladeteil aus den beiden Formstücken 27 und 31 in die Nut 18 eingeführt und weiter in Richtung der Biopsienadel 1 geschoben, bis die ausgeschnittenen Stufe 35 an der Unterseite des Formstückes 31 an die Biopsienadel 1 anschlägt. Dadurch wird diese zwischen der Stufe 35, der Seitenfläche des Plättchens 20 und dem Präparatplättchen 5 eingeklemmt und in dieser Position fixiert. Die Spitze 7 des Zylinders 6 befindet sich nun vertikal über der mit der Biopsieprobe 3 gefüllten Ausnehmung 2 der Biopsienadel 1 **(Fig. 11 b).**

Alternativ dazu kann die Biopsienadel 1 auch in einen vorher vorbereiteten Hohlraum eingeführt werden. Ein solcher Hohlraum kann beispielsweise derart gebildet werden, daß die beiden letzten Verfahrensschritte vertauscht werden: Nach dem Positionieren des Präparatplättchens 5 in Position II wird der Umladeteil in der Nut 18 eingesetzt und verschoben, bis die Seitenfläche des Formstücks 31 bzw. 37 an der Seitenfläche des Rahmens 40 des Probenhalters 39 anliegt. In den dadurch gebildeten Hohlraum zwischen Nut 18, Seitenfläche von 31 bzw. 37 und Seitenfläche des Plättchens 20 wird anschließend die Biopsienadel 1 eingeführt.

Nun wird das Formstück 27 mit dem Zylinder 6 in vertikaler Richtung manuell nach unten verschoben entsprechend der dargestellten Pfeilrichtung A-A. Durch diese vertikale Bewegung schiebt die Spitze 7 des Zylinders 6 die Biopsieprobe 3 aus der Ausnehmung 2 der Biopsienadel 1 in die Vertiefung 4 des vorbereiteten Präparatplättchens 5. Bei dieser Vertikalbewegung ist die Federkraft der zwischen den Formstücken 27 und 31 eingelegten Spiralfeder 36 zu überwinden **(Fig. 11 c).**

Wird nunmehr die auf das Formstück 27 ausgeübte Kraft aufgehoben, so wird der Zylinder 6 durch die Federkraft der Spiralfeder 36 wieder in seine Startposition zurückgeschoben. Dadurch wird die leere Biopsienadel 1wieder in ihrer Längsachse beweglich und kann zurückgezogen werden **(Fig. 11 d).**

Zum Abschluß wird der Umladeteil 26 aus den beiden Formstücken 27 und 31 am besten um seine Längsachse rotiert und dadurch vom Transferteil 15 entfernt. Das mit der Biopsieprobe 3 gefüllte Präparatplättchen kann nunmehr in Richtung des Probenhalters 39 verschoben und in diesem festgeklemmt werden. Die Unterseite des Formstücks 31 sowie die Spitze 7 des Zylinders 6 werden gereinigt und stehen für den nächsten Probentransfer zur Verfügung **(Fig. 11 e).**

## Patentansprüche

1. Vorrichtung zur Behandlung von Biopsieproben, wobei die Biopsieproben mittels einer an sich bekannten Mikrobiopsienadel aus dem Gewebe entnommen werden und in einen an sich bekannten Probenhalter übertragen werden,
- mit einem auf einem Transferteil 15 verschiebbaren und auswechselbaren Schlitten 21 zum Transport von flachen Präparatplättchen 5;
- mit auf diesem Schlitten 21 auswechselbaren Präparatplättchen 5 mit mindestens einem Probenraum 4 zur Aufnahme von Biopsieproben 3; sowie
- mit einem auf diesem Transferteil 15 verschiebbaren und auswechselbaren Umladeteil mit mindestens einem im wesentlichen vertikal verlaufenden Hohlraum zur Aufnahme von Vorrichtungen für den Transfer von Biopsieproben 3 aus einer Ausnehmung 2 einer Biopsienadel 1 in den Probenraum 4 eines Präparatplättchens 5,
**dadurch gekennzeichnet daß,**
der Transferteil 15 einen Hohlraum zur auswechselbaren Aufnahme und exakten Positionierung der Biopsienadel 1 in einer vorbestimmten Position aufweist.

2. Vorrichtung nach Patentanspruch 1, **dadurch gekennzeichnet, daß** die Biopsienadel 3 bekannter Ausführung eine axial verlaufende Ausnehmung 2 mit den Maßen im Bereich von 0,2 bis 0,3 mm Tiefe und 1,0 bis 5,0 mm Länge aufweist.

3. Vorrichtung nach Patentanspruch 1 und 2, **dadurch gekennzeichnet, daß** die Präparatplättchen 5 aus einem formstabilen Werkstoff bestehen und mindestens einen Hohlraum (Probenraum) 4 zur Aufnahme der Biopsieproben 3 aufweisen, dessen Volumen im wesentlichen demjenigen der Ausnehmung 2 der Biopsienadel 1 und demjenigen der Biopsieprobe 3 entspricht.

4. Vorrichtung nach Patentanspruch 1, **dadurch gekennzeichnet, daß** der Umriß der Präparatplättchen 5 mindestens eine Ecke aufweist, welche in entsprechende Ecken einer Ausnehmung 22 eines Schlittens 21 passen, sowie mindestens einen Hohlraum 4 zur Aufnahme der Biopsieproben aufweisen.

5. Vorrichtung nach Patentanspruch 1 bis 4, **dadurch gekennzeichnet, daß** die Präparatplättchen 5 aus einem metallischen Werkstoff, vorzugsweise aus einem der Metalle Kupfer, Messing, Titan, Aluminium hergestellt sind.

6. Vorrichtung nach Patentanspruch 1 bis 5, **dadurch gekennzeichnet, daß** die Präparatplättchen eine Formstück 5 aus einem metallischen Werkstoff sowie eine mit diesem Formstück dauerhaft verbundene Metallfolie 13 aufweisen.

7. Vorrichtung nach Patentanspruch 1 bis 6, **dadurch gekennzeichnet, daß** die Präparatplättchen 5 vorzugsweise folgende maximalen Maße aufweisen : Durchmesser 6,2 mm, Dicke (a): 5 mm, Länge des Schlitzes 11: 5 mm.

8. Vorrichtung nach Patentanspruch 1 bis 7, **dadurch gekennzeichnet, daß** der verschiebbare und auswechselbare Schlitten zum Transport der flachen Präparatplättchen 5 einen flachen Streifen 21, eine Ausnehmung 22 am einen Ende des Streifens 21, einen in der Längsachse des Streifens 21 verlaufenden vertikalen Schlitz 23, einen Arretierungsstift 24 an der Unterseite sowie einen Handgriff in der Form eines Stifts 25 an der Oberseite des Streifens 21 aufweist.

9. Vorrichtung nach Patentanspruch 1 bis 8, **dadurch gekennzeichnet, daß** die Ausnehmung 22 in dem Streifen 21 einen Kreisbogen mit einer Ausdehnung von maximal 220° bildet.

10. Vorrichtung nach Patentanspruch 1 bis 8, **dadurch gekennzeichnet, daß** die Ausnehmung 22 in dem Streifen 21 Ecken aufweist, in welche entsprechende Ekken eines Präparateplättchens 5 passen.

11. Vorrichtung nach Patentanspruch 1 bis 10, **dadurch gekennzeichnet, daß** der Transferteil aus mindestens einem quaderförmigen Formstück 15 besteht, welches an seiner Oberseite eine in der Längsachse verlaufende Nut 16 zur Aufnahme eines Schlittens 21 sowie eine in der Querachse des Formstücks verlaufende Nut 18 zur Aufnahme eines Umladeteils aufweist.

12. Vorrichtung nach Patentanspruch 11, **dadurch gekennzeichnet, daß** das Formstück 15 des Transferteils im Boden der Nut 16 eine weitere, über einen Teil der Nut 16 verlaufende Vertiefung 17 zur Aufnahme des Arretierungsstifts 24 des Schlittens 21, eine vertikal verlaufende, hohlzylinderförmige Ausnehmung19 im Boden der Nut 18 zur Aufnahme eines Probenhalters 39 von an sich bekannter Bauart sowie auf seiner Oberseite ein dauerhaft mit dem Formstück 15 verbundenes Plättchen 20 aufweist, welches einen Teil der Nut 16 überdeckt und zur Führung und exakten Positionierung der gefüllten Biopsienadel 1 in einer vorbestimmten Position vor dem Transfer der Biopsieprobe 3 dient.

13. Vorrichtung nach Patentanspruch 12, **dadurch gekennzeichnet, daß** das Plättchen 20 und das auf dem Schlitten 21 liegende Präparateplättchen 5 mit der einen vertikalen Seitenwand der Nut 16 einen in horizontaler Richtung verlaufenden Hohlraum bilden zum exakten Positionieren einer mit einer Biopsieprobe 3 gefüllten Biopsienadel 1 in einer vorbestimmten Position.

14. Vorrichtung nach Patentanspruch 1 bis 13, **dadurch gekennzeichnet, daß** der Umladeteil
(a) ein Formstück 27 als Oberteil,
(b) ein Formstück 31 als Unterteil,
c) einen in einer vertikal verlaufenden Ausnehmung 28 des Oberteils 27 dauerhaft eingesetzten und in einer vertikal verlaufenden Ausnehmung 33 des Unterteils 31 verschiebbar und auswechselbar eingesetzten Zylinder 6 mit einer Spitze 7,
(d) eine um den Zylinder 6 gelegten und zwischen Ober- und Unterteil angeordneten kurzen Spiralfeder 36, sowie
(e) einen horizontal in seinem Oberteil 27 verlaufenden Schlitz 29 aufweist,
(f) mit dessen Hilfe der Oberteil am Unterteil mit einer Schraubverbindung 30 verankert wird,
(g) derart daß Oberteil und Unterteil durch Überwinden der Federkraft der Spiralfeder 36 gegeneinander in der Längsachse des Zylinders 6 verschiebbar sind.

15. Vorrichtung nach Patentanspruch 1 bis 13, **dadurch gekennzeichnet, daß** der Umladeteil aus einem Formstück 37 besteht, welches eine vertikal durch das gesamte Formstück verlaufende, im wesentlichen hohlzylinderförmige Ausnehmung 38 zur Aufnahme des Vorderteils 8 einer Injektionsspritze sowie an seiner Unterseite eine ausgeschnittene, im wesentlichen in der Längsachse des Formstücks verlaufende Stufe 35 aufweist.

16. Verfahren zur Verwendung der Vorrichtung gemäß Patentanspruch 1 bis 15, **dadurch gekennzeichnet, daß**
a) ein leeres Präparatplättchen 5 in den in Position I befindlichen Schlitten 21 eingesetzt wird,
b) der Probenhalter 39 in die Ausnehmung 19 des Transferteils 15 eingesetzt wird,
c) daß dieser Schlitten 21 in der Nut 16 des Transferteils 15 bis zum zentral angeordneten Anschlag der Vertiefung 17 (Position II) verschoben wird;
d) der Umladeteil in die Nut 18 des Transferteils 15 eingesetzt wird;
e) daß die Biopsienadel 1 mit der Biopsieprobe 3 vertikal über dem Probenraum 4 eines Präparatplättchens 5 fixiert wird,
f) daß die Biopsieprobe 3 in den Probenraum 4 eines Präparatplättchens 5 eingeführt wird,
g) daß der Umladeteil wieder aus der Nut 18 des Formstücks 15 entfernt wird,
h) daß der Schlitten 21 mit dem mit der Biopsieprobe 3 gefüllten Präparatplättchen 5 in der Nut 16 an den dezentralen Anschlag des Stiftes 24 (Position III) in der Vertiefung 17 verschoben wird,
i) daß das Präparatplättchen 5 in dem an sich bekannten, in der Ausnehmung 19 des Formstücks 15 befindlichen Probenhalter 39 in an sich bekannter Weise durch Schraubbewegungen befestigt wird.

17. Verfahren nach Patentanspruch 16, **dadurch gekennzeichnet, daß** die Biopsienadel 1mit der Biopsieprobe 3 vertikal über dem Probenraum 4 eines Präparatplättchens fixiert wird (Schritt e), indem zunächst die Biopsienadel 1 lose an die Seitenwand des Plättchens 20 angelegt und anschließend durch Verschieben des Formstücks 31 in der Nut 18 zwischen dem Präparatplättchen 5, der Seitenwand des Plättchens 20 und der Stufe 35 an der Unterseite des Formstücks 31 festgeklemmt wird.

18. Verfahren nach Patentanspruch 16, **dadurch gekennzeichnet, daß** die Biopsienadel 1mit der Biopsieprobe 3 vertikal über dem Probenraum 4 eines Präparatplättchens fixiert wird (Schritt e), indem sie in einen vorher vorbereiteten Hohlraum eingeführt wird.

19. Verfahren nach Patentanspruch 18, **dadurch gekennzeichnet, daß** der vorher vorbereitete Hohlraum durch das Präparatplättchen 5, die Seitenwand des Plättchens 20 und die Stufe 35 an der Unterseite des Formstücks 31 gebildet wird.

20. Verfahren nach Patentanspruch 16 bis 19, **dadurch gekennzeichnet, daß** die Biopsieprobe 3 durch eine Vertikalbewegung des Zylinders 6 des Formstücks 27 nach unten in den Probenraum 4 eines Präparatplättchens 5 übertragen wird.

21. Verfahren nach Patentanspruch 16 bis 19, **dadurch gekennzeichnet, daß** die Biopsieprobe durch den vertikalen Kanal 38 des Umladeteils 37 mittels eines Flüssigkeitsstrahles in den Probenraum 4 eines Präparatplättchens 5 befördert wird, wobei der Überschuß der Spülflussigkeit durch die Nuten 16 und 18 aus dem Formstück 15 austritt.

## Claims

1. A device for treating biopsy specimens, the biopsy specimens being removed from the tissue by means of a microbiopsy needle known *per se* and being transferred into a specimen holder known per se, comprising
- a slide (21), displaceable and exchangeable on a transfer part (15), for transporting flat preparation plates (5); and
- preparation plates (5), exchangeable on said slide (21), comprising at least one specimen well (4) for receiving biopsy specimens (3) ; and
- a shifter part, displaceable and exchangeable on said transfer part (15), having at least one vertically extending channel for introduction of the devicees for the transfer of biopsy specimens (3) out of an opening (2) of biopsy needle (1) into the specimen well (4) of a preparation plate (5);
*wherein* said transfer part (15) comprises a hollow portion for exchangeable introduction and exact positioning of said biopsy needle (1) in a predetermined position.

2. The device as defined in Claim 1, wherein the biopsy needle (3) of known configuration has an axially extending opening (2) with dimensions in the range of 0.2 to 0.3 mm deep and 1.0 to 5.0 mm long.

3. The device as defined in Claims 1 and 2 wherein the preparation plates (5) are made from rigid material and have at least one cavity (4) for the reception of biopsy specimens (3) corresponding in volume essentially to the volume of opening (2) of the biopsy needle (1) and to the volume of the biopsy specimen (3).

4. The device as defined in Claim 1, wherein the contour of the preparation plate (5) has at least one corner fitting into corresponding corners of a recess (22) of said slide (21), as well as at least one cavity (4) for the reception of biopsy specimens.

5. The device as defined in Claims 1 through 4, wherein the preparation plates (5) are produced from a metallic material, preferably from one of the metals copper, brass, titanium, aluminium.

6. The device as defined in Claims 1 through 5, wherein the preparation plates have a shaped part (5) made of a metallic material, as well as a metal foil (13) permanently joined to said shaped part.

7. The device as defined in Claims 1 through 6, wherein the preparation plates (5) preferably have the following maximum dimensions: diameter 6.2 mm; thickness (a) 5 mm, length of the slot (11) 5 mm.

8. The device as defined in Claims 1 through 7, wherein the displaceable and exchangeable slide has, for transport of the flat preparation plates (5), a flat strip (21), a recess (22) at one end of the strip (21), a vertical slot (23) extending in the longitudinal axis of the strip (21), a locking peg (24) on the under side, and a handle in the form of a peg (25) on the upper side of the strip (21).

9. The device as defined in Claims 1 through 8, wherein the recess (22) in the strip (21) forms a circular arc having an extension of at most 220°.

10. The device as defined in Claims 1 through 8, wherein the recess (22) in the strip (21) has corners into which corresponding corners of a preparation plate (5) fit.

11. The device as defined in Claims 1 through 10, wherein the transfer part comprises at least one parallelepipedal shaped part (15) which has on its upper side a groove (16) extending in the longitudinal axis for reception of a slide (21), and a groove (18) extending in the transverse axis of the shaped part for reception of a shifter part.

12. The device as defined in Claim 11, wherein the shaped part (15) of the transfer part has, in the bottom of the groove (16), a further depression (17) extending over a portion of the groove (16), for reception of the locking peg (24) of the slide (21); a vertically extending, hollow-cylindrical opening (19) in the bottom of the groove (18) for reception of a specimen holder (39) of a design known per se; and, on its upper side, a plate (20), permanently joined to the shaped part (15), which overlaps a portion of the groove (16) and serves to guide and precisely position the biopsy needle (1) in a predetermined position 1 prior to transfer of the biopsy specimen (3).

13. The device as defined in Claim 12, wherein the plate (20) and the preparation plate (5) lying on the slide (21) form, with the one vertical lateral wall of the groove (16), a cavity extending in the horizontal direction for precisely positioning a biopsy needle (1) filled with a biopsy specimen (3) in a predetermined position.

14. The device as defined in Claims 1 through 13, wherein the shifter part comprises
(a) a shaped part (27) as upper part;
(b) a shaped part (31) as lower part;
c) a cylinder (6), permanently inserted in a vertically extending orifice (28) of the upper part (27) and displaceably and exchangeably inserted in a vertically extending orifice (33) of the lower part (31), having a tip (7);
(d) a short helical spring (36) placed around the cylinder (6) and arranged between the upper and lower parts; and
(e) a slot (29) extending horizontally in its upper part (27),
(f) with which the upper part is anchored to the lower part with a screw connection (30)
(g) in such a way that the upper part and the lower part are displaceable with respect to one another in the longitudinal axis of the cylinder (6) by overcoming the spring force of the helical spring (36).

15. The device as defined in Claims 1 through 13, wherein the shifter part comprises a shaped part (37) which comprises a substantially hollow-cylindrical orifice (38), extending vertically through the entire shaped part, for reception of the front part (8) of an injection syringe; and, on its underside, a cut-out step (35) extending substantially in the longitudinal axis of the shaped part.

16. A method for using the device according to Claims 1 through 15, wherein
a) an empty preparation plate (5) is inserted into the slide (21) which is in position l;
b) a specimen holder (39) is inserted into the opening (19) of the transfer part (15),
c) said slide (21) is displaced in the groove (16) of the transfer part (15) as far as the centrally arranged stop of the depression (17) (position II);
d) the shifter part is inserted into the groove (18) of the transfer part (15);
e) the biopsy needle (1) with the biopsy specimen (3) is positioned vertically above the specimen well (4) of a preparation plate (5);
f) the biopsy specimen (3) is introduced into the specimen well (4) of a preparation plate (5);
g) the shifter part is removed again from the groove (18) of the shaped part (15);
h) slide (21) with the preparation plate (5) filled with the biopsy specimen (3) is displaced in the groove (16) against the non-central stop of the peg (24) (position III) in the depression (17);
i) the preparation plate (5) is secured in the specimen holder (39), known per se and located in the opening (19) of the shaped part (15), in a manner known per se by means of screw movements.

17. The method as defined in Claim 16, wherein the biopsy needle (1) with the biopsy specimen (3) is positioned vertically above the specimen well (4) of a preparation plate (step e) by the fact that firstly the biopsy needle (1) is placed loosely against the lateral wall of the plate (20) and then is clamped in place, by displacement of the shaped part (31) in the groove (18), between the preparation plate (5), the lateral wall of the plate (20), and the step (35) on the underside of the shaped part (31).

18. The method as defined in Claim 16, wherein the biopsy needle (1) with the biopsy specimen (3) is positioned vertically above the specimen well (4) of a preparation plate (step e) by the fact that it is introduced into a previously prepared cavity.

19. The method as defined in Claim 18, wherein the previously prepared cavity is formed by the preparation plate (5), the lateral wall of the plate (20), and the step (35) on the underside of the shaped part (31).

20. The method as defined in Claims 16 through 19, wherein the biopsy specimen (3) is transferred downward, by a vertical motion of the cylinder (6) of the shaped part (27), into the specimen well (4) of a preparation plate (5).

21. The method as defined in Claims 16 through 19, wherein the biopsy specimen (3) is conveyed through the vertical channel (38) of the shifter part (37), by means of a stream of fluid, into the specimen well (4) of a preparation plate (5), the excess flushing fluid emerging from the shaped part (15) through the grooves (16 and 18).

## Revendications

1. Dispositif de traitement d'échantillons de biopsie obtenus de tissus à l'aide d'une aiguille de biopsie, comprenant
- une pièce glissante (21) mobile et interchangeable sur une pièce de transfert (15) destinée au transfert de plaquettes d'échantillons (5) plaines;
- des plaquettes d'échantillons (5) interchangeables sur la pièce glissante comprenant au moins un espace vide (4) pour les échantillons de biopsie (3); et
- une pièce de transbordement mobile et interchangeable sur la pièce de transfert contenant au moins une ouverture en direction verticale destinée à introduire des dispositifs de transfert des échantillons de biopsie (3) d'une ouverture (2) d'une aiguille de biopsie (1) à l'espace vide (4) d'une plaquette d'échantillons (5)
***caractérisé en ce que***
la partie de transfert (15) comprend une ouverture destinée à reprendre et à positionner une aiguille de biopsie (1) de manière précise dans une position préétablie.

2. Dispositif selon la revendication 1 **caractérisé en ce que** l'aiguille de biopsie (3) comprend une ouverture (2) en direction axiale dimensionnée entre 0,2 et 0,3 mm en largeur et entre 1,0 et 5,0 mm en longueur.

3. Dispositif selon les revendications 1 et 2 **caractérisé en ce que** les plaquettes d'échantillons (5) sont formés d'un matériel rigide et disposent au moins d'un espace vide (4) destiné à reprendre les échantillons de biopsie (3) et dont le volume correspond essentiellement au volume de l'ouverture (2) de l'aiguille (1) de biopsie et au volume de l'échantillon (3) de biopsie.

4. Dispositif selon la revendication 1 **caractérisé en ce que** le contour des plaquettes d'échantillons (5) dispose au moins d'un angle correspondant aux angles analogues d'une ouverture (22) de la pièce glissante (21), et au moins d'un espace vide (4) destiné à reprendre des échantillons de biopsie.

5. Dispositif selon les revendications 1 à 4 **caractérisé en ce que** les plaquettes d'échantillons (5) sont formés d'un matériel métallique de préférence un des métaux suivants: cuivre, laiton, titanium, aluminium.

6. Dispositif selon les revendications 1 à 5 **caractérisé en ce que** les plaquettes d'échantillons comprennent une plaquette (5) d'un matériel métallique et une feuille métallique (13) jointe de façon permanente à la plaquette (5).

7. Dispositif selon les revendications 1 à 6 **caractérisé en ce que** les plaquettes (5) d'échantillons sont dimensionnés de préférence comme suit: diamètre 6,2 mm, épaisseur (a) 5 mm, longueur de l'ouverture (11): 5 mm.

8. Dispositif selon les revendications 1 à 7 **caractérisé en ce que** la pièce glissante mobile et interchangeable pour le transfert des plaquettes (5) pour échantillons comprend une pièce plaine (21), une ouverture (22) dans la partie ultérieure de la pièce (21), une fente (23) verticale dans l'axe longitudinale de la pièce (21), une goupille d'arrêt (24) à la partie inférieure ainsi qu'une poignée en forme de pointe (25) à la partie supérieure de la pièce (21).

9. Dispositif selon les revendications 1 à 8 **caractérisé en ce que** l'ouverture (22) de la pièce (21) forme un arc de cercle de 220° au maximum.

10. Dispositif selon les revendications 1 à 8 **caractérisé en ce que** l'ouverture (22) de la pièce (21) comprend des angles correspondant aux angles des plaquettes (5) d'échantillons.

11. Dispositif selon les revendications 1 à 10 **caractérisé en ce que** le dispositif de transfert comprend au moins une pièce (15) en forme de parallèlépipède contenant, sur sa partie supérieure en direction axiale, une rainure (16) pour insérer la pièce (21) ainsi qu'une rainure (18) en direction transversale pour insérer une pièce de transbordement.

12. Dispositif selon la revendication 11 **caractérisé en ce que** la pièce (15) de la pièce de transfert comprend
- dans le fond de la rainure (16), une seconde cavité (17) placé dans une partie de la rainure (16) destinée à arrêter la goupille d'arrêt (24) de la pièce (21),
- une ouverture (19) verticale en forme de cylindre placé dans le fond de la rainure (18) destinée à reprendre un support (39) d'échantillons de construction connue,
- ainsi qu'une plaque (20) placée sur la partie supérieure et fixée de façon permanente à la pièce (15) couvrant une partie de la rainure (16) et destinée à guider et positionner l'aiguille (1) de biopsie remplie de manière précise dans une position préétablie avant le transfert de l'échantillon de biopsie (3).

13. Dispositif selon la revendication 12 **caractérisé en ce que** la plaque (20) et la plaquette (5) d'échantillons placée sur la pièce glissante (21) forment un espace en direction horizontale avec la paroi verticale de la rainure (16) destiné à positionner l'aiguille (1) de biopsie remplie de matériel (3) de biopsie dans une position préétablie de manière précise.

14. Dispositif selon les revendications 1 à 13 **caractérisé en ce que** la pièce de transbordement comprend
(a) une pièce (27) comme partie supérieure,
(b) une pièce (31) comme partie inférieure,
c) un cylindre (6) avec une pointe (7) positionné de manière permanente dans un espace (28) vertical de la partie supérieure (27) et placé dans un espace (33) vertical de la partie (31) inférieure de manière mobile et interchangeable,
(d) un ressort spiral (36) autour du cylindre (6) placé entre la partie inférieure et la partie supérieure, ainsi que
(e) une fente (29) horizontale dans la partie supérieure (27),
(f) destinée à ancrer la partie supérieure dans la partie inférieure à l'aide d'un raccord de vis (30),
(g) de manière que la partie supérieure et la partie inférieure frottent l'un contre l'autre dans l'axe longitudinale du cylindre (6) en contrepoids de la force du ressort spiral (36).

15. Dispositif selon les revendications 1 à 13 **caractérisé en ce que** la pièce de transbordement comprend une pièce (37) comprenant un débouchement (38) vertical formé essentiellement en cylindre creux perçant la pièce entière et destiné à l'ancrage de la partie antérieure (8) d'une seringue d'injection ainsi que, dans sa partie inférieure, une marche (35) placée essentiellement dans l'axe longitudinale de la pièce.

16. Procédé utilisant le dispositif selon les revendications 1 à 15 **caractérisé en ce que**
a) une plaquette (5) d'échantillons vide est placée en position 1 dans la pièce glissante (21),
b) le support (39) et placé dans l'ouverture (19) de la partie de transfert (15),
c) la pièce glissante (21) est transférée dans la rainure (16) de la partie de transfert (15) jusque à l'arrêt central de la cavité (17) (position II);
d) la pièce de transbordement est placée dans la rainure (18) de la pièce de transfert (15);
e) l'aiguille de biopsie (1) contenant l'échantillon de biopsie (3) est fixée en position verticale sur l'espace vide (4) d'une plaquette d'échantillons (5),
f) l'échantillon de biopsie (3) est introduit dans l'espace vide (4) d'une plaquette d'échantillons (5),
g) la pièce de transbordement est enlevée de la rainure (18) de la pièce (15),
h) la pièce glissante (21) contenant la plaquette (5) d'échantillons avec l'échantillon de biopsie (3) est transférée dans la rainure (16) jusque à l'arrêt non central de la goupille d'arrêt (24) (position III) de la cavité (17),
i) la plaquette (5) d'échantillons est fixée dans le support (39) d'échantillons contenu dans l'ouverture (19) de la pièce (15) par un mouvement de vis.

17. Procédé selon la revendication 16 **caractérisé en ce que** l'aiguille de biopsie (1) avec son échantillon (3) est fixée verticalement sur l'espace vide (4) d'une plaquette d'échantillons (phase e) en alignant l'aiguille de biopsie (1) de manière non permanente à la paroi latérale de la plaque (20) et en la transférant successivement par l'action de transfert de la pièce (31) dans la rainure (18) de manière que l'aiguille (1) se trouve enfermée entre la plaquette (5), la paroi latérale de la plaque (20) et la marche (35) à la partie inférieure de la pièce (31).

18. Procédé selon la revendication 16 **caractérisé en ce que** l'aiguille de biopsie (1) contenant un échantillon (3) est placée verticalement en dessus de l'espace vide (4) d'une plaquette d'échantillons (phase e) en l'introduisant dans un espace vide préétabli.

19. Procédé selon la revendication 18 **caractérisé en ce que** l'espace préétabli est formé de la plaquette (5) d'échantillons, de la paroi latérale de la plaque (20) et de la marche (35) à la partie inférieure de la pièce (31).

20. Procédé selon les revendications 16 à 19 **caractérisé en ce que** l'échantillon de biopsie (3) est transféré par un mouvement vertical du cylindre (6) de la pièce (27) en bas dans l'espace vide (4) d'une plaquette (5) d'échantillons.

21. Procédé selon les revendications 16 à 19 **caractérisé en ce que** l'échantillon de biopsie (3) est transféré par le débouchement (38) vertical de la pièce de transbordement (37) dans l'espace vide (4) d'une plaquette (5) d'échantillons en utilisant un courant de liquide et que le liquide superflu quitte la pièce (15) par les débouchements (16 et 18).
